# EUROPEAN PATENT APPLICATION

(11) **EP 4 496 330 A1**
(43) Date of publication of application: **22.01.2025**
(21) Application number: 23210084.2
(22) Date of filing: 15.11.2023
(51) Int. Cl.: H04N 23/55, H04N 23/54, G02B 27/28, H04M 1/02, G03B 11/00, G03B 30/00

(54) **IMAGE CAPTURE DEVICE AND IMAGE CAPTURE METHOD**

(30) Priority: 17.07.2023 CN 202310875018
(71) Applicant: Shenzhen Idata Information Technology Co., Ltd, Shenzhen (CN)
(72) Inventor: ZHANG, LIJING, Shenzhen City (CN); ZHANG, SONGLAI, Shenzhen City (CN); ZHOU, XIAOQIN, Shenzhen City (CN); ZENG, MIN, Shenzhen City (CN)
(74) Representative: Valet Patent Services Limited

(57) **Abstract**

The present application provides an image capture method and an image capture device. The image capture device includes a camera configured to collect an image, where the camera includes a lens and an image sensor, the lens is configured to converge light and project it onto the image sensor, the image sensor is configured to photoelectrically converse the light; a polarizer located on an optical path in front of the image sensor to filter the light projected onto the image sensor; and a drive device, configured to drive the polarizer to rotate relative to the image sensor, the polarizer is on the optical path in front of the image sensor during a rotation process so as to change a polarization direction of the light projected on the image sensor through a rotation of the polarizer. By rotating the polarizer, multiple polarization directions of light can be obtained to meet the application requirements of various scenarios.

## Description

The present disclosure relates to the field of image capture technologies, and in particular, to an image capture device and an image capture method.

### BACKGROUND

With the development of image recognition technology, information recognition for barcode has been widely used in the IVD (in vitro diagnostic products) medical detection industry, industrial process control, warehousing logistics, postal management and other automatic recognition fields due to its advantages of fast recognition speed and low production cost. In information recognition and process management in these fields, rapid and successful identification of barcodes greatly improves the work efficiency.

Existing imaging systems generally use lighting components to supplement light on a target surface, where the lens images the target image onto the image sensor, and then the processor or decoding chip decodes the image information. However, in an application scenario of some reflective materials, this imaging method will form reflective light spots in an illuminated area of the lighting components, which will affect the imaging quality of the scanned object and reduce the decoding success rate. The solution of existing technology is to turn off the lighting components that generate reflective light spots, but this method will reduce the contrast ratio of target imaging, especially in some application scenarios with low ambient lighting, further reducing the effectiveness of target imaging and affecting decoding efficiency.

In the mobile phone industry, a technical solution has been developed to eliminate reflective light spots in images through polarizers. This involves proving multiple switchable polarizers with different polarization angles in front of the lens. When there is a reflective light spot in the image collected through one of the polarizers, the other polarizers are switched. However, this method of randomly switching polarizers has blindness, and although a large number of polarizers are used, it not only increases costs, but also a limited number of polarizers with different polarization directions can be switched; and thus, rendering it difficult to meet the needs of different scenarios.

It is needed to develop some new technologies to address the aforementioned issues.

### SUMMARY

The purpose of the present application is to provide an image capture device and an image capture method that can reduce the adverse effects of local overexposure caused by reflective light spots.

To achieve the above objectives, the present application adopts the following technical means.

The present application provides an image capture device, where it includes a camera, configured to capture an image, the camera includes a lens and an image sensor, the lens is configured to converge light and project it onto the image sensor, the image sensor is configured to photoelectrically converse the light; a polarizer located on an optical path in front of the image sensor to filter the light projected onto the image sensor; and a drive device, configured to drive the polarizer to rotate relative to the image sensor, where the polarizer is always on the optical path in front of the image sensor during a rotation process so as to change a polarization direction of the light projected on the image sensor through a rotation of the polarizer.

Optionally, the drive device includes a motor, where a side of the polarizer is provided with a first gear, the motor is provided with a second gear; the second gear is engaged with the first gear to drive the polarizer to rotate through the motor.

Optionally, the drive device includes the motor, and the polarizer is provided on a rotation axis of the motor, and the rotation axis is parallel to an optical axis of the lens.

Optionally, the polarizer rotates around the optical axis of the lens.

Optionally, the image capture device further includes a casing, where the drive device is a toggle mechanism provided on the polarizer, the toggle mechanism protrudes from the casing to drive the polarizer to rotate by flipping the toggle mechanism.

Optionally, the image capture device further includes a display screen, the display screen is configured to display an image preview window, which is configured to observe a change of the image captured by the camera during the rotation of the polarizer.

Optionally, the polarizer is a linear polarizer.

The present application provides an image capture method, which includes: collecting an image through a camera, where the camera includes a lens and an image sensor, the lens is configured to converge light and project it onto the image sensor, the image sensor is configured to photoelectrically convert the light, and a polarizer located on an optical path in front of the image sensor to filter the light projected onto the image sensor; rotating the polarizer relative to the camera driven by a drive device, where the polarizer is always located on an optical path in front of the image sensor during a rotation process so as to change a polarization direction of the light projected on the image sensor through a rotation of the polarizer.

Optionally, the drive device includes a motor, where a side of the polarizer is provided with a first gear, the motor is provided with a second gear; the second gear is engaged with the first gear to drive the polarizer to rotate through the motor.

Optionally, the image capture method further includes observing a change of the image captured by the camera during the rotation of the polarizer through an image preview window, where the image preview window is displayed on a display screen.

Compared with existing technology, the present application has the following beneficial effects:
the image capture device and image capture method of the present application can filter the light projected onto the image sensor through a polarizer, the polarizer is driven to rotate relative to the image sensor through a drive device. The polarizer is always located on the optical path in front of the image sensor during the rotation process, so as to change the polarization direction of the light projected onto the image sensor through the rotation of the polarizer. By rotating a single polarizer, multiple polarization directions of light can be obtained, which meets the application requirements of various scenarios.

### BRIEF DESCRIPTION OF DRAWINGS

FIG. 1 is a schematic diagram of an image capture device according to an embodiment of the present application.
FIG. 2 is a schematic diagram of another perspective of the image capture device in FIG. 1.
FIG. 3 is a cross-sectional view along A-A direction in FIG. 1.
FIG. 4 is a block diagram of the image capture device according to an embodiment of the present application.
FIG. 5 is a cross-sectional view of the image capture device in another embodiment of the present application.
FIG. 6 is a flowchart of a method for capture images by an image capture device according to an embodiment of the present application.
FIG. 7 is a schematic diagram of the image capture device in another embodiment of the present application.
FIG. 8 is a partial decomposition diagram of the image capture device in FIG. 7.
FIG. 9 is a cross-sectional view along B-B direction in FIG. 7.

### DESCRIPTION OF EMBODIMENTS

In order to facilitate a better understanding of the purpose, structure, feature, and effect of the present application, further explanations are provided in combination with the drawings and specific implementation modes.

The image capture device 100 disclosed in the embodiment of the present application can be various mobile phones, tablet PC, surveillance cameras 7, scanning guns, ring scanners, handheld terminals (PDAs), fixed scanners, image recognition robots, etc. The image capture device 100 can be used to collect images or to capture one or more optical markers, such as one-dimensional codes, two-dimensional codes, OCR images and text, ultraviolet anti-counterfeiting codes, infrared anti-counterfeiting codes, etc.

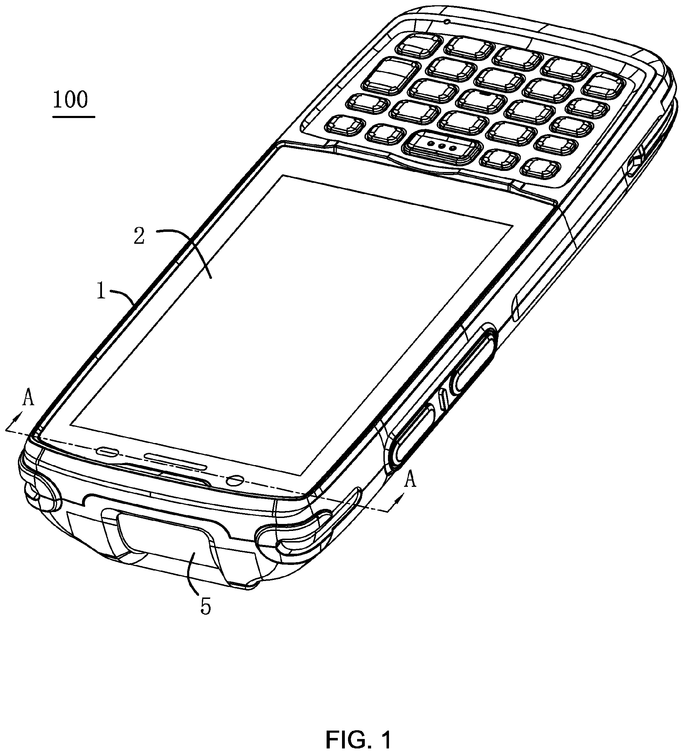

An embodiment is shown in FIG. 1, where the image capture device 100 is a handheld terminal. The following will provide a detailed introduction to the structure, function, and image capture method of the image capture device 100 in the present application, in combination with specific embodiments.

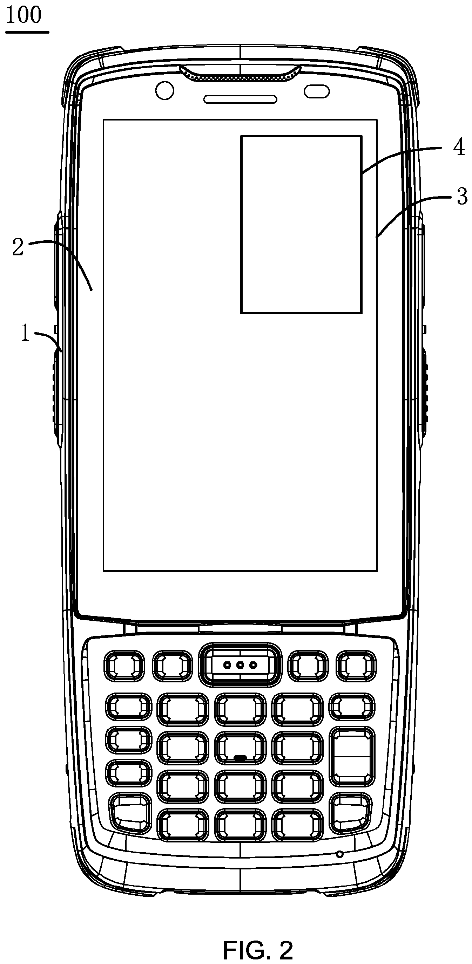

Referring to FIG. 2, the image capture device 100 includes a casing 1 for gripping, a display screen 2 on the front of the casing 1, and a data display window 3 on the display screen 2. The data display window 3 can be used to display an information of optical marks captured by the image capture device 100; the display screen 2 is also provided with an image preview window 4, which has a size smaller than that of the data display window 3; and thus, allowing the image preview window 4 to be suspended above the data display window 3 for previewing images during a process of image capture by the image capture device 100. Of course, on other image capture devices such as a mobile phone 100, only the image preview window 4 can be provided without the data display window 3.

A front-end face of the casing 1 is provided with a scanning window 5, which is covered by a transparent material such as glass, transparent plastic, or transparent composite materials.

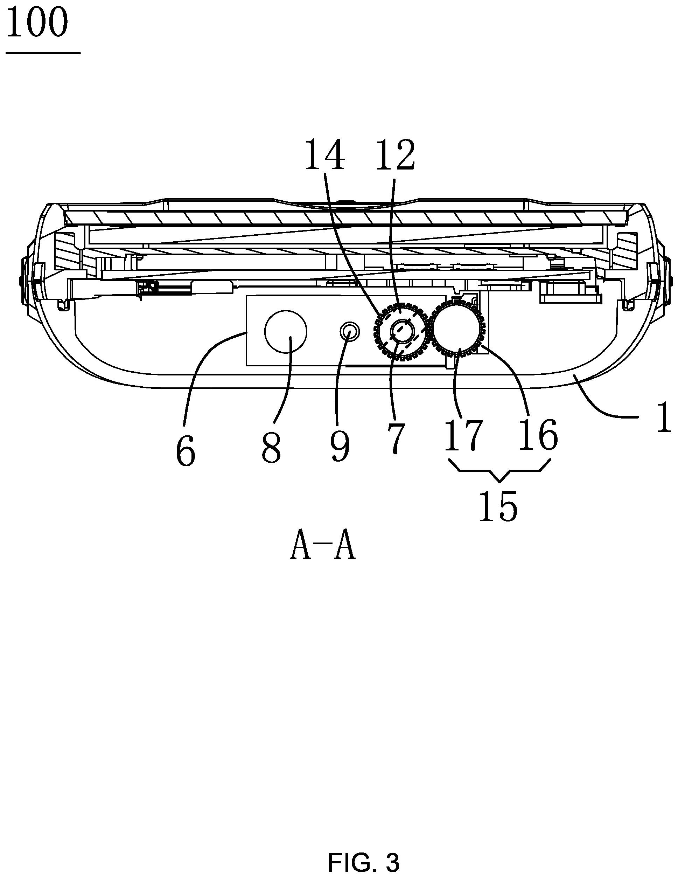

Referring to FIG. 3, a scanning engine 6 is housed in the casing 1 for collecting images through the scanning window 5. The scanning engine 6 integrates a camera 7, a supplementary light unit 8, and an aiming unit 9. The camera 7 is configured to collect images, and it includes a lens 10 and an image sensor 11. The lens 10 is configured to converge light and project it onto the image sensor 11, the image sensor 11 is configured to photoelectrically converse light, the supplementary light unit 8 is configured to provide supplementary light to illuminate a view field of the camera 7, and the aiming unit 9 is configured to project an aiming pattern and aim at a target.

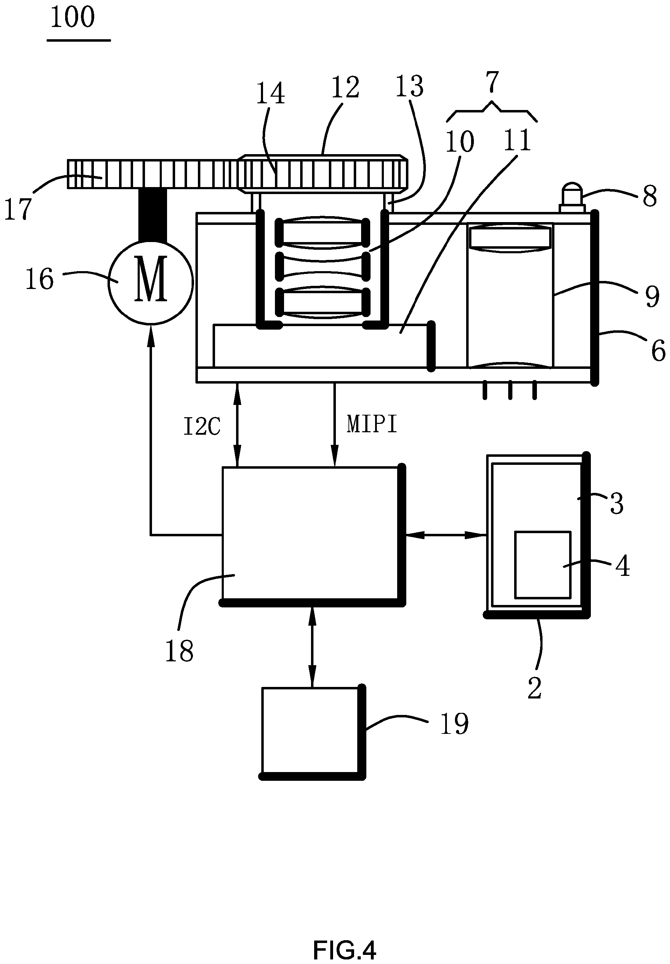

In combination with FIGs. 3 and 4, a polarizer 12 is provided at a front end of the lens 10 through a sleeve 13 to filter the light projected onto the image sensor 11. The polarizer 12 is a linear polarizer 12, and a polarization direction of the polarizer 12 is shown by a dashed line inclined 45 ° to the bottom left in FIG. 3. A side of the polarizer 12 is provided with a first gear 14; a drive device 15 is located next to the camera 7 to drive the polarizer 12 to rotate relative to the image sensor 11. The drive device 15 includes a motor 16, and a rotation axis of the motor 16 is provided with a second gear 17. The second gear 17 is engaged with the first gear 14; and when the motor 16 rotates, the second gear 17 drives the first gear 14 to rotate, Thus, the motor 16 drives the polarizer 12 to rotate around the sleeve 13. Due to a coaxial arrangement of the sleeve 13 and an optical axis of the lens 10, the polarizer 12 rotates around the optical axis of the lens 10, so that the polarizer 12 remains on the optical path in front of the image sensor 11 during rotation. When the polarizer 12 rotates, the polarization direction of the polarizer 12 rotates around the optical axis of the lens 10, and the polarization direction of the light projected onto the image sensor 11 changes accordingly. In other embodiments (not shown in drawings), the polarizer 12 can be directly provided on the rotation axis of the motor 16, the rotation axis is parallel to the optical axis of the lens 10. During the rotation process of the motor 16, the polarizer 12 is always located on the optical path in front of the lens 10, which can filter the light projected onto the image sensor 11. Optionally, the polarizer 12 can be a circular polarizer 12 to meet needs of different scenarios.

The drive device 15 and the camera 7 are electrically coupled to a processor 18, the processor 18 is electrically connected to the display screen 2 and a memory 19. When images are collected through the image capture device 100, a user can preview the images collected by the camera 7 in real-time through the image preview window 4. If there are reflective light spots on the images, the processor 18 controls the rotation of the motor 16, then the polarizer 12 is driven to rotate by the motor 16, thereby changing the polarization direction of the light projected on the image sensor 11. When the reflective light spot on the image decreases during the rotation of the polarizer 12, it indicates that the rotation direction of the polarizer 12 is correct. And the processor 18 continues to drive the polarizer 12 to rotate until the reflective light spot on the image reaches its minimum or disappears; on the contrary, when the polarizer 12 rotates, the reflective light spot on the image becomes larger and larger, the processor 18 changes the rotation direction of the motor 16, and drives the polarizer 12 to rotate in an opposite direction until the reflective light spot on the image reaches its minimum or disappears. The image preview window 4 can also preview the quality of the image. For example, if a target optical mark in the image is blurry, the motor 16 can drive the polarizer 12 to rotate, so that when the polarizer 12 rotates to a suitable position, the image preview window 4 can preview a clear image of the target optical mark. When the user preview images through the image preview window 4, the user can manually control the processor 18 to drive the motor 16 to rotate, or the processor 18 can automatically determine the image quality and control the rotation direction of the motor 16.

In the embodiment of the present application, the polarizer 12 is located in front of the lens 10. In other embodiments (not shown in the drawings), the polarizer 12 can be embedded in the lens 10 or between the lens 10 and the image sensor 11. In short, as long as the polarizer 12 is located on the optical path in front of the image sensor 11, it can filter the light projected onto the image sensor 11.

In the embodiments of the present application, the drive device 15 can also drive the polarizer 12 to rotate in steps, and the polarizer 12 can rotate in steps by evenly dividing the number of teeth of the first gear 14 into circumferential angles. For example, if the number of teeth of the first gear 14 is 20, the motor 16 can drive the polarizer 12 to rotate in steps by at least 18 ° each time. In other embodiments (not shown in the drawings), the drive device 15 can drive the polarizer 12 to rotate continuously at any angle. For example, the polarizer 12 includes a magnetic component, and the drive device 15 drives the polarizer 12 to rotate continuously through an electromagnetic force.

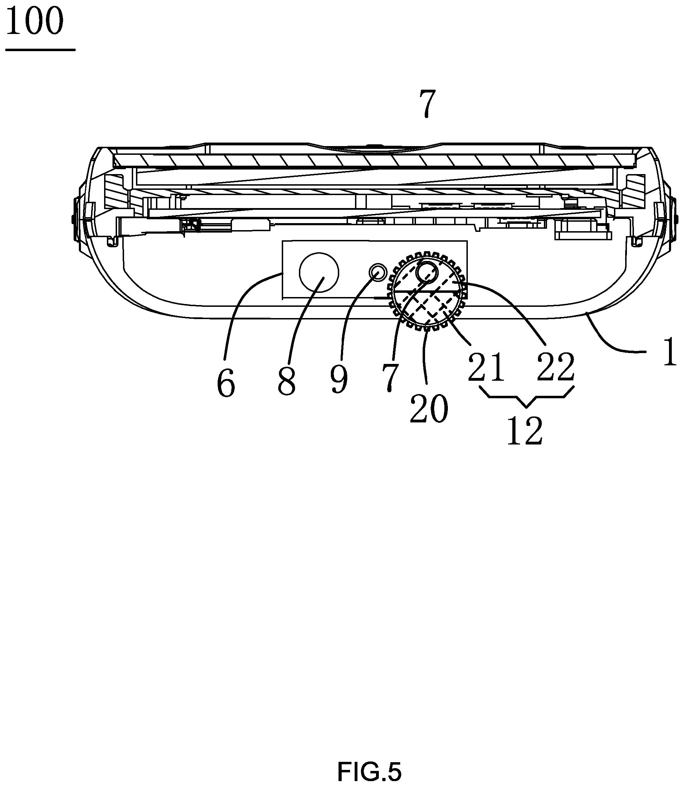

In the embodiments of the present application, the drive device 15 is driven through electricity In one embodiment, as shown in FIG. 5, the drive device 15 is a toggle mechanism 20 arranged on the polarizer 12, which protrudes below the casing 1 of the image capture device 100 for a user to manually flip the toggle mechanism 20 to drive the polarizer 12 to rotate. During the rotation of the polarizer 12, the polarizer 12 is always located in front of the lens 10, the light projected onto the image sensor 11 can be filtered. During the process of manually rotating the polarizer 12, it can be combined with the image preview window 4 to preview the change of the image in real-time to obtain a clear image.

Due to the rotation of the linear polarizer 12 once, its polarization direction periodically changes twice, when the circular polarizer 12 rotates once, its polarization direction periodically changes four times. In theory, the linear polarizer 12 only needs to occupy about half of a circle, while the circular polarizer 12 only needs to occupy about a quarter of a circle. By rotating the polarizer 12, polarized light in any polarization direction can be filtered.

Based on this, in an embodiment of the polarizer 12 shown in FIG. 5, the polarizer 12 includes a linearly polarized region 21 located in an upper half circle and a circularly polarized region 22 located in a lower half circle, which can obtain desired linearly polarized or circularly polarized light in any polarization direction through the rotation of a single polarizer 12. It can be imagined that the circularly polarizes region 22 on the polarizer 12 can be reduced to a range of about a quarter of the circle, and the additional range of about a quarter of the circle can be provided with other optical structures (not shown in the drawings), such as providing a filter film to filter light with specific wavelengths, or providing a convex lens to amplify the image, for example, when collecting small-sized or low mil value barcodes through the image capture device 100, the barcode is amplified through the convex lens for easy scanning. It can be imagined that the embodiment of the polarizer 12 shown in FIG. 5 can be combined with the embodiment of the polarizer 12 driven by electricity to rotate in FIG. 3. It can be imagined that the embodiment of the polarizer 12 shown in FIG. 5 can be combined with the image preview window 4 on the display screen 2 to preview images collected by different optical structures, and thereby obtaining clear images.

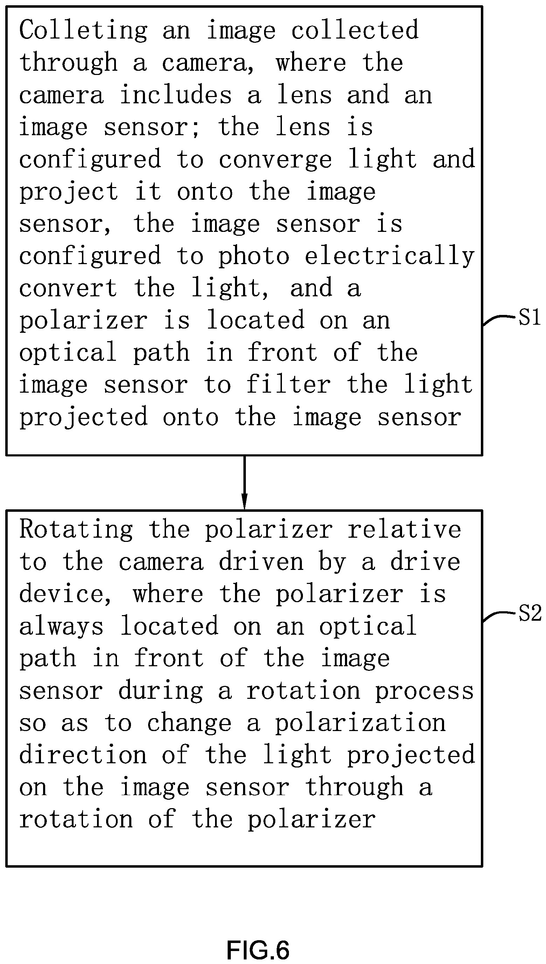

As shown in FIG. 6, it is a flowchart for collecting an image through the image capture device 100 described in the aforementioned embodiment, and it includes the following steps:

S1: colleting an image collected through a camera 7, where the camera 7 includes a lens 10 and an image sensor 11; the lens 10 is configured to converge light and project it onto the image sensor 11, the image sensor 11 is configured to photoelectrically convert the light, and a polarizer 12 is located on an optical path in front of the image sensor 11 to filter the light projected onto the image sensor 11.

S2: rotating the polarizer 12 relative to the camera 7 driven by a drive device 15, where the polarizer 12 is always located on an optical path in front of the image sensor 11 during a rotation process, so as to change a polarization direction of the light projected on the image sensor 11 through a rotation of the polarizer 12.

The memory 19 may include one or more non-transient storage media, such as volatile and/or non-volatile memory 19, which may be fixed or movable. Specifically, the memory 19 can be configured to store information, data, applications, instructions, and the like for enabling a processing module to perform various functions according to exemplary embodiments of the present invention. For example, the memory 19 can be configured to buffer input data for processing by a central processor 18. Alternatively, the memory 19 can be configured to store instructions executed by the central processor 18. The memory 19 can be considered as a main memory 19 and included in volatile storage devices such as RAM or other forms, where the volatile storage device only maintains its content during operation, and/or the memory 19 can be included in non-volatile storage devices such as ROM (read only memory), EPROM (Erasable Programmable Read-Only Memory), EEPROM (Electrically Erasable Programmable Read-Only Memory), FLASH, or other types of storage devices, where the non-volatile storage device maintains its content independent of the power state of the processing module. The memory 19 can also be included in an auxiliary storage device that stores a large amount of data, such as an external disk memory 19. In some embodiments, the disk memory 19 can communicate with the central processor 18 via data bus or other routing components using input/output components. The auxiliary memory 19 can include hard drives, compact discs, DVDs, storage cards, or any other type of mass storage known to those skilled in the art. The memory 19 can store one or more of the various optical information capture, transmission, processing, and decoding processes or methods to be described next.

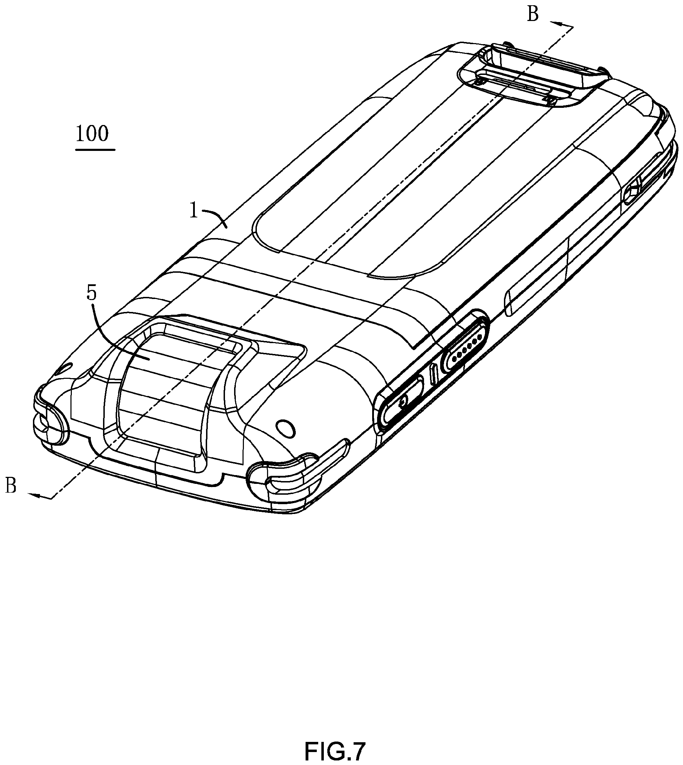

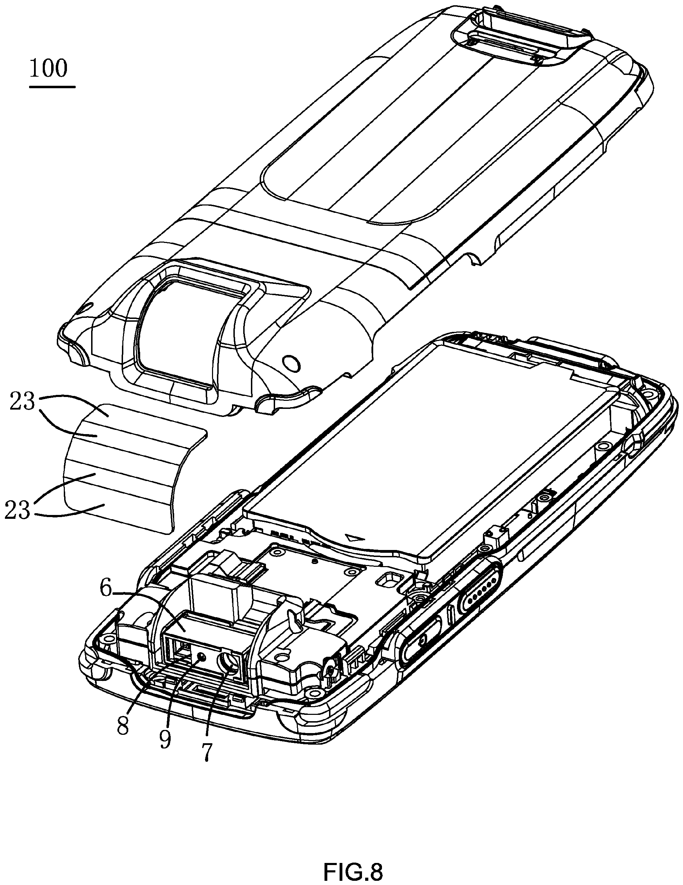

FIGs. 7 to 9 illustrate another embodiment of the image capture device 100, where the scanning window 5 extends from a front-end face of the casing of the image capture device 100 to a back-end face, and has multiple planes 23 facing forward, diagonally downwards, and directly downwards.

The scanning engine 6 is housed in the casing 1 and exposed in the scanning window 5 for collecting barcodes through the scanning window 5. The scanning engine 6 is housed in a metal bracket, where one end of the bracket is connected to a motor 16 via a pivot, and the other end of the bracket is connected to an angle sensor. The motor 16 drives the pivot to rotate, thereby driving the scanning engine 6 to rotate. The angle sensor monitors and controls a rotation angle of the scanning engine 6. The pivot is provided at an equal distance from multiple planes 23 of a transparent lens, so that regardless of the rotation angle of the scanning engine 6, the distance between the camera 7 and the transparent lens remains unchanged, and thereby reducing an adjustment cost.

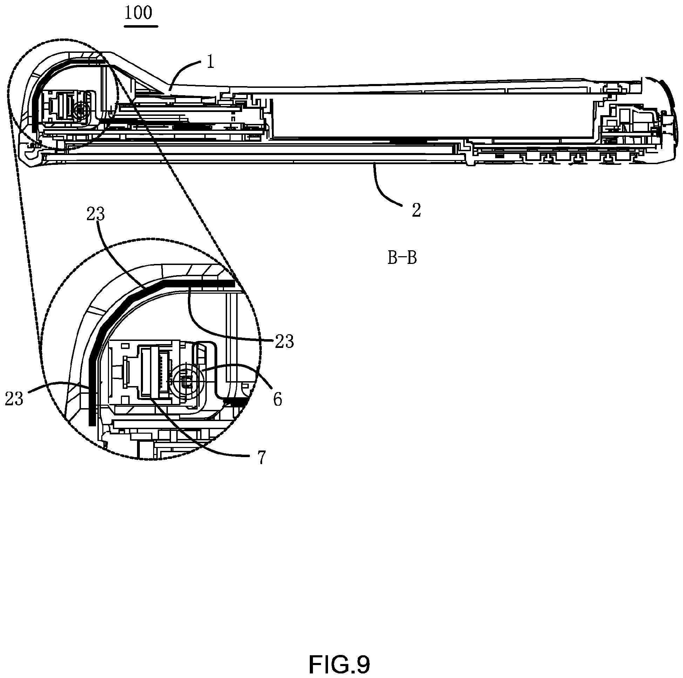

From FIG. 9, it can be seen that the scanning engine 6 can rotate from a direction facing straight ahead to a direction facing straight down, and it means that the rotation angle of the scanning engine 6 is 0-90 °, which greatly improves the rotation angle of the scanning engine 6 and meeting different rotation angle needs of different users. The rotation angle of the scanning engine 6 can vary in steps between 0 and 90 °, it means that the scanning engine 6 can only rotate specific angles, such as 0 °, 30 °, 45 °, 60 °, 90 °, etc. Different rotation angles correspond to one of the planes 23 of the scanning window 5, so that when the camera 7 rotates, it collects images through the plane 23 of the scanning window 5 without worrying about a distortion of the barcode image caused by the scanning window 5.

Continuing with reference to FIG. 9, there are different optical structures on different planes 23 of the scanning window 5, which can be different optical films or lenses. For example, there is a linear polarization film with a polarization direction in a vertical direction on the plane 23 facing forward (vertical plane 23), and then there is a linear polarization film with a polarization direction in a horizontal direction on the plane 23 inclined downward 30 °. Once again, a circular polarization film is provided on the plane 23 facing 45 ° downwards, then, an infrared filter is provided on the plane 23 facing 60 ° downwards, and finally, a convex lens is provided on the plane 23 facing directly downwards (horizontal plane 23) to amplify the image. When the image is needed to be collected through different optical structures, the scanning engine 6 is simply rotated to align with a corresponding plane 23.

This embodiment is also suitable for use in combination with the aforementioned image preview window 4 to capture clear images in real-time through the image preview window 4 when the scanning engine 6 rotates to capture images through different planes 23.

In other embodiments (not shown in drawings), the camera 7 and the supplementary light part do not need to be integrated, but can be provided separately; alternatively, only the camera 7 can be rotated, while other components (such as supplementary light unit) cannot be rotated. Therefore, multiple supplementary light parts with different light angles can be provided. When the camera 7 is rotated to a certain angle, the corresponding supplementary light part can be turned on. Of course, all supplementary light parts can also be turned on regardless of power consumption.

In other embodiments (not shown in drawings), a polarizer can be provided on the optical path in front of the supplementary light unit 8 to convert the light emitted by the supplementary light unit 8 into polarized light, and then cooperated with a rotatable polarizer 12 to fully absorb the reflective spot caused by the light emitted by the supplementary light unit 8 and avoid image overexposure.

The barcode scanner of the present application is provided with a scanning window 5 with multiple planes 23, so that when the camera 7 rotates to different angles, the image can be collected through different planes 23, and thereby increasing the rotation angle of the camera 7. Due to the fact that a small volume of the components is needed to be rotated and the rotation angle of the camera 7 is increased, the volume of the entire barcode scanner is reduced, and thereby improving the reliability of the barcode scanner.

The image capture device and image capture method of the present application have the following beneficial effects:
the image capture device 100 and the image capture method of the present application filter the light projected onto the image sensor 11 through the polarizer 12, and the polarizer 12 is driven to rotate relative to the image sensor 11 through the drive device 15; the polarizer 12 is always located on the optical path in front of the image sensor 11 during the rotation process, so as to change the polarization direction of the light projected onto the image sensor 11 through the rotation of the polarizer 12. By rotating a single polarizer 12, multiple polarization directions of light can be obtained, which meets the application requirements of various scenarios.

The above detailed explanation is only an explanation of the preferred embodiments of the present application and does not limit the scope of the present application. Therefore, any equivalent changes made by applying the technical solution of the present description and the illustrations are included in the protection scope of the present application.

## Claims

1. An image capture device, **characterized in that** it comprises:
a camera, configured to collect an image, wherein the camera comprises a lens and an image sensor, the lens is configured to converge light and project it onto the image sensor; the image sensor is configured to photoelectrically converse the light;
a polarizer, which is located on an optical path in front of the image sensor to filter the light projected onto the image sensor;
a drive device, configured to drive the polarizer to rotate relative to the image sensor, and the polarizer is on the optical path in front of the image sensor during a rotation process, so as to change a polarization direction of the light projected on the image sensor through a rotation of the polarizer.

2. The image capture device as claimed in claim 1, **characterized in that** the drive device comprises a motor; wherein a side of the polarizer is provided with a first gear, the motor is provided with a second gear, the second gear is engaged with the first gear to drive the polarizer to rotate through the motor.

3. The image capture device as claimed in claim 1, **characterized in that** the drive device comprises a motor, the polarizer is provided on a rotation axis of the motor, and the rotation axis is parallel to an optical axis of the lens.

4. The image capture device as claimed in claim 1, **characterized in that** the polarizer rotates around an optical axis of the lens.

5. The image capture device as claimed in claim 1, **characterized by** further comprising a casing, wherein the drive device is a toggle mechanism provided on the polarizer, the toggle mechanism protrudes from the casing to drive the polarizer to rotate by flipping the toggle mechanism.

6. The image capture device as claimed in claim 1, **characterized by** further comprising a display screen, the display screen is configured to display an image preview window, which is configured to observe a change of the image captured by the camera during the rotation of the polarizer.

7. The image capture device as claimed in claim 1, **characterized in that** the polarizer is a linear polarizer.

8. An image capture method, **characterized in that** it comprises:
collecting an image through a camera, wherein the camera comprises a lens and an image sensor; the lens is configured to converge light and project it onto the image sensor, the image sensor is configured to photoelectrically convert the light; and a polarizer located on an optical path in front of the image sensor to filter the light projected onto the image sensor;
rotating the polarizer relative to the camera driven by a drive device, wherein the polarizer is located on an optical path in front of the image sensor during a rotation process, so as to change a polarization direction of the light projected on the image sensor through a rotation of the polarizer.

9. The image capture method as claimed in claim 8, **characterized in that** the drive device comprises a motor; wherein a side of the polarizer is provided with a first gear, the motor is provided with a second gear, the second gear is engaged with the first gear to drive the polarizer to rotate through the motor.

10. The image capture method as claimed in claim 8, **characterized in that** it comprises observing a change of the image captured by the camera during the rotation of the polarizer through an image preview window, wherein the image preview window is displayed on a display screen.
